Europäisches Patentamt

European Patent Office

Office européen des brevets

(11) Veröffentlichungsnummer : **0 043 551**
**B1**

# EUROPÄISCHE PATENTSCHRIFT

(45) Veröffentlichungstag der Patentschrift :
23.05.84

(21) Anmeldenummer : 81105103.6

(22) Anmeldetag : 01.07.81

(51) Int. Cl.³ : **C 01 B 15/043**

(54) Verfahren zur Herstellung von Peroxiden zweiwertiger Metalle.

(30) Priorität : 07.07.80 DE 3025682

(43) Veröffentlichungstag der Anmeldung :
13.01.82 Patentblatt 82/02

(45) Bekanntmachung des Hinweises auf die Patenterteilung : 23.05.84 Patentblatt 84/21

(84) Benannte Vertragsstaaten :
AT BE CH DE FR GB IT LI LU NL

(56) Entgegenhaltungen :
CH-A- 165 153
DE-A- 1 542 842
DE-A- 1 667 586
DE-A- 2 918 137
DE-C- 171 372

(73) Patentinhaber : Peroxid-Chemie GmbH
Dr.-Gustav-Adolph-Strasse 2
D-8023 Höllriegelskreuth bei München (DE)

(72) Erfinder : Dötsch, Werner, Dr. rer. nat.
Kreuzgasse 3
D-5462 Bad Hönningen (DE)
Erfinder : Dillenburg, Helmut, Dr. Dipl.-Chem.
Wilhelm-Feiser-Strasse 17
D-4134 Rheinberg (DE)
Erfinder : Fuchs, Paul-Wilhelm
Am Paffelter 71
D-5462 Bad Hönningen (DE)
Erfinder : Honig, Helmut, Dr. Dipl.-Chem.
Kranzlstrasse 14
D-8191 Geiting (DE)

(74) Vertreter : Lauer, Dieter, Dr.
c/o Kali-Chemie Aktiengesellschaft Postfach 220
D-3000 Hannover 1 (DE)

**Beschreibung**

Die vorliegende Erfindung betrifft ein Verfahren zur Herstellung von Peroxiden zweiwertiger Metalle.

Peroxide zweiwertiger Metalle finden in der Technik in zunehmendem Maße Anwendung. So werden z. B. Erdalkaliperoxide für medizinische und pharmakologische Zwecke und in der Kosmetik eingesetzt. Neuerdings gewinnt $CaO_2$ in zunehmenden Maße an Bedeutung, da es zur Verbesserung des Wachstums von Kulturpflanzen dient. Auch in der Abwassertechnik macht man sich die Möglichkeit der langsamen Sauerstoffabgabe von Peroxidverbindungen zunutze. Metallperoxide finden auch Verwendung im Bereich der Vulkanisier- und Schweißtechnik.

Peroxide zweiwertiger Metalle werden im allgemeinen hergestellt, indem man aus wässrigen Lösungen oder verdünnten Suspensionen ihrer Salze, Oxide oder Hydroxide durch Umsetzung mit wässriger Wasserstoffperoxidlösung peroxidhaltige Reaktionsmischungen herstellt, diese zentrifugiert oder abfiltriert und auf Horden trocknet. Das Trockengut wird üblicherweise vermahlen und gegebenenfalls gesiebt.

Aus der DE-A-15 42 642 ist ein Verfahren zur Herstellung von $CaO_2$ bekannt, bei dem eine sehr verdünnte Lösung von Wasserstoffperoxid mit einem Überschuß an Calciumhydroxid bei Temperaturen unter 30 °C zum Calciumperoxid-Oktahydrat umgesetzt wird, das dann in einer zusätzlichen Trockenstufe in das wasserfreie Peroxid überführt wird.

Allen diesen Verfahren haften eine Reihe von Nachteilen an. Sie sind aufwendig wegen der Notwendigkeit einer Abtrennung von Mutterlauge durch Zentrifugieren und einer Vermahlung des hordengetrockneten Produktes. Außerdem ist die Wirtschaftlichkeit nur begrenzt gegeben, da beträchtliche Peroxidverluste durch Zersetzung von Wasserstoffperoxid in der durch die relativ verdünnten Suspensionen sich ergebenden großen Mutterlaugenmengen sowie beim Trocknungsvorgang, bedingt durch lange Verweilzeit, entstehen.

Ferner müssen wegen der starken Verdünnung des Reaktionsgemisches große Mengen Wasser unnötigerweise befördert und in einer energieintensiven Trocknungsstufe entfernt werden. Außerdem sind zusätzliche Regeleinrichtungen zur Temperaturkontrolle und zusätzliche Verfahrensstufen zur Entfernung des Calciumhydroxid-Überschusses nötig. Ein weiterer Nachteil ist eine gewisse Inhomogenität des Endproduktes, die durch Zersetzungen während des Trocknens und des anschließenden Mahlvorganges gegeben ist.

Gemäß CH-A-165 153 werden feste, hochprozentige Perverbindungen (Peroxide und Persalze) hergestellt, indem eine wasserfreie Metallverbindung in festem Zustand mit derart begrenzten Mengen der Wasserstoffsuperoxid-Lösung und in solcher Weise vermischt werden, daß eine feuchte Mischung auch vorübergehend nicht entsteht, und hernach der Wassergehalt des unmittelbar in trockener Form gewonnenen Produktes durch schonende Entwässerung vor dem völligen Abbinden der Flüssigkeit noch weiter vermindert und damit der Gehalt an aktivem Sauerstoff und die Haltbarkeit noch weiter erhöht wird. Zwingende Voraussetzung des Erfolges für dieses Verfahren ist, daß eine feuchte Mischung auch vorübergehend nicht entsteht, d. h., daß es bei Zusammenbringen der Wasserstoffsuperoxid-Lösung mit den festen Stoffen an keiner Stelle zu einer Ansammlung von Flüssigkeit kommt, die eine hydrolytische Spaltung zur Folge hätte.

Dieses Verfahren hat zum Nachteil, daß Metallverbindungen und Wasserstoffperoxid nur langsam und vorsichtig mit einander umgesetzt werden können und selbst dann entstehen Produkte, die bezüglich des Gehaltes an Metallperoxid nicht befriedigen.

Aufgabe der Erfindung ist es, ein Verfahren zur Herstellung von Peroxiden zweiwertiger Metalle zur Verfügung zu stellen, das die Nachteile der bekannten Verfahren vermeidet.

Erfindungsgemäß wird zur Lösung dieser Aufgabe festes, wasserfreies oder hydratisiertes Oxid und/oder Hydroxid des zweiwertigen Metalles in einer Intensiv-Mischapparatur, gegebenenfalls unter Kühlen, kontinuierlich mit Wasserstoffperoxid-Lösung zu einer Suspension umgesetzt und diese unmittelbar einem Kurzzeittrockner zur Trocknung zugeführt, wobei man für den Stoffstrom im Bereich zwischen Eintritt in die Intensiv-Mischapparatur bis Eintritt in den Kurzzeittrockner eine mittlere Verweilzeit von 0,1 bis 15 Minuten einstellt.

Angesichts des Standes der Technik war es überraschend, daß die festen Oxide und/oder Hydroxide im technischen Maßstab direkt mit Wasserstoffperoxid in einem einfachen Verfahren umgesetzt werden können, ohne das sich hohe Verluste an Aktivsauerstoff ergeben.

Es können alle handelsüblichen, festen, wasserfreien oder hydratisierten Metalloxide oder Hydroxide eingesetzt werden, wobei naturgemäß der spätere Einsatz des Peroxids die Auswahl des einzusetzenden Rohstoffs mitbestimmt. So ist es z. B. angebracht, bei der Herstellung von Peroxiden, die im Human- oder Veterinärbereich Anwendung finden sollen, die Reinheit des Ausgangs-Rohstoffes entsprechend auszuwählen.

Als Wasserstoffperoxid kann handelsübliche Ware eingesetzt werden, die auch bekannte Aktivsauerstoffstabilisatoren enthalten kann. Es empfiehlt sich, eine wässrige Lösung mit einer $H_2O_2$-Konzentration von 30 bis 70 Gewichtsprozent zu wählen.

Gemäß dem erfindungsgemäßen Verfahren werden beide Reaktionspartner kontinuierlich direkt in die Intensiv-Mischapparatur eingespeist, wo sie sofort zu einem homogenen Gemisch verarbeitet werden und dabei gleichzeitig miteinander reagieren.

2

Als Intensiv-Mischapparatur werden Aggregate eingesetzt, die eine schnelle, intensive Vermischung beider Reaktionspartner ermöglichen. Besonders geeignet ist z. B. eine schnell rotierende Exzenterpumpe, die eine gute Homogenisierung ergibt und gleichzeitig das Reaktionsgemisch weiterfördert. Es ist aber auch z. B. ein Pflugscharmischer, in Kombination mit einem Fördermittel zum Weitertransport des Reaktionsgemisches, verwendbar. Zur Abführung eines Teils der Lösungs- und Reaktions-Wärme kann die Mischapparatur mit einem Kühlmantel versehen sein.

Eine mögliche konstruktive Lösung ist, den Feststoff mittels einer, mit einer Hohlwelle versehenen Förderschnecke in den Intensiv-Mischer einzuspeisen und das Wasserstoffperoxid durch die Hohlwelle in den Mischer zu leiten, so daß die beiden Reaktionspartner erst im Inneren des Mischers vereinigt und sofort zu einem homogenen Gemisch verarbeitet werden.

Die kontinuierlich eingespeisten Stoffströme sind derart aufeinander abgestimmt, daß die Reaktionspartner vorzugsweise in etwa stöchiometrischem Verhältnis eingesetzt werden, d. h. mit Abweichungen von ± 20 Mol.-% vom Verhältnis gemäß der Reaktionsgleichung. Es ist allerdings auch möglich, vom stöchiometrischen Verhältnis weiter abzuweichen. Wenn z. B. Produkte mit definiertem, niedrigem Aktivsauerstoffgehalt hergestellt werden sollen, so kann es vorteilhafter sein, durch Abweichung vom stöchiometrischen Verhältnis dieses Produkt direkt herzustellen, als durch Beibehaltung des stöchiometrischen Verhältnisses ein höher konzentriertes Produkt herzustellen, welches nachträglich durch Verdünnen mit inerten Stoffen auf den gewünschten Aktivsauerstoff-Gehalt eingestellt werden muß.

Das die Intensiv-Mischapparatur verlassende Gemisch wird direkt einem Kurzzeittrockner zugeführt, wobei gegebenenfalls aber Mittel zur Vergleichmäßigung des Produktstromes, wie z. B. ein Puffergefäß, vorgesehen sein können. Ein besonders bevorzugtes Verfahren arbeitet dabei in der Weise, daß die mittlere Verweilzeit des Stoffstromes — d. h. des Gemisches aus Einzatzkomponenten und/oder Reaktionsprodukten — im Bereich zwischen Eintritt in die Intensiv-Mischapparatur bis zum Eintritt in den Kurzzeittrockner insbesondere 0,5 bis 5 Minuten beträgt.

Als Kurzzeittrockner werden dabei Trocknungsapparaturen eingesetzt, die den kontinuierlichen Stoffstrom ohne längere thermische Belastung zu trocknen gestatten. Die Trocknungstemperaturen werden dabei auf den Durchsatz und auf das spezielle Peroxid abgestimmt.

Gut bewährt hat sich der Einsatz von Sprühtrocknern, wobei Sprühtrockner mit Zentrifugalzerstäuber bevorzugt werden. Für diesen Trocknertyp sollte das anfallende, zu trocknende Reaktionsgemisch gut pumpbar bis gerade noch pumpfähig sein. Für feststoffreichere Reaktionsgemische kann mit Vorteil ein Flash-dryer eingesetzt werden.

Folgende Vorteile zeichnen das erfindungsgemäße Verfahren gegenüber dem Stand der Technik aus :

a) Durch etwa stöchiometrischen Einsatz der Reaktionspartner und Arbeiten mit konzentrierten Reaktionsgemischen wird der Anteil an mitzubewegendem Ballast (Wasser, überschüssiger Reaktionspartner) äußerst niedrig gehalten.

b) Durch direkte Sprühtrocknung des Reaktionsgemisches entfallen aufwendige Trenn- und Reinigungsstufen. Außerdem fällt das Produkt direkt als frei fließendes Pulver an und muß nicht in zusätzlichen Zerkleinerungsvorrichtungen abschließend behandelt werden.

c) Das Verfahren arbeitet kontinuierlich.

d) Durch die kurze Reaktionszeit können Verluste durch Aktivsauerstoffzersetzung verringert werden.

e) Durch Ausnutzen der Lösungs- und Reaktionswärme kann bei der Trocknung zumindestens ein Teil der sonst notwendigen Energie eingespart werden.

f) Das Verfahren ist sehr umweltfreundlich, da praktisch kein Abwasser anfällt.

Auch das nach dem erfindungsgemäßen Verfahren erhaltene Produkt zeichnet sich durch Vorteile gegenüber dem Stand der Technik aus :

a) Die Vermeidung lokaler Zersetzungsreaktionen sichert eine gute Homogenität des Produktes.

b) Durch die Sprühtrocknung wird eine gute Rieselfähigkeit, gleichmäßige Kristallstruktur und ein enges, einheitliches Kornspektrum erreicht.

Das erfindungsgemäße Verfahren wird durch die folgenden Beispiele nur erläutert und nicht beschränkt.

## Beispiel 1

Aus einem Feststoff-Vorratsbehälter wurde kontinuierlich mittels einer Förderschnecke 84 kg/h $Ba(OH)_2 \cdot H_2O$-Pulver der Intensiv-Mischapparatur zugeführt. Gleichzeitig wurde aus einem $H_2O_2$-Vorratsbehälter kontinuierlich 36,8 l/h 39,2 Gew.-%ige $H_2O_2$-Lösung (stabilisiert mit 300 mg $PO_4^{3-}$/l) durch die Hohlwelle der Förderschnecke in die Intensiv-Mischapparatur dosiert. Als Intensiv-Mischapparatur diente eine Mischerpumpe (Supraton® 207). Unter Wärmeentwicklung bildete sich eine Barium-Peroxid-suspension, die sofort über ein zwischengeschaltetes Ausgleichsgefäß, das zur Vergleichmäßigung des stoßweise aus der Mischerpumpe austretenden Produktstromes diente, unmittelbar dem Zentrifugalzerstäuber eines Sprühtrockners zugeführt wurde. Die Trockungstemperaturen waren auf den konstanten Produktstrom abgestimmt und betrugen am Trocknereintritt 300 °C und am Trockneraustritt 80-90 °C. Das erhaltene Produkt (75,8 kg/h) enthielt 92,3 Gew.-% $BaO_2$ und wies einen mittleren Teilchendurchmesser von ca. 5 μ auf. Die mittlere Verweilzeit des Reaktionsgemisches zwischen Eintritt in die Intensiv-Mischapparatur und Eintritt in den Kurzzeittrockner betrug 2,5 Minuten.

Weitere Versuche wurden gemäß der in Beispiel 1 beschriebenen Weise durchgeführt. Abweichende Verfahrensparameter und die Ergebnisse dieser Versuche sind der folgenden Tabelle zu entnehmen.

In der Tabelle verwendete Abkürzungen haben folgende Bedeutung :

| Beispiel | 2 | 3 | 4 | 5 |
|---|---|---|---|---|
| Fs | $MgO$ | $Ca(OH)_2$ | $Sr(OH)_2 \cdot$ $8\ H_2O$ | $ZnO$ |
| Kg Fs/h | 11,6 | 47,2 | 92,4 | 38,8 |
| 1 $H_2O_2$/h | 21 | 52,9 | 28,9 | 39,3 |
| TT-Eintritt | 250 | 250 - 300 | 250 - 300 | 250 |
| TT-Austritt | 110 - 120 | 110 - 120 | 50 | 110 - 120 |
| Produkt | | | | |
| - Art | $MgO_2$ (45 %) | $CaO_2$ (75 %) | $SrO_2 \cdot H_2O$ (92,2 %) | $ZnO_2$ (67,4 %) |
| - kg/h | 16,1 | 46,2 | 47,9 | 43,8 |
| - mD | 10 μ | 5 μ | 5 μ | 0,5 μ |
| - mV | 1 min. | 2 min. | 2,5 min. | 1,5 min. |

Fs = eingesetzter Feststoff
TT = Trocknertemperatur in °C
mD = mittlerer Teilchendurchmesser
mV = mittlere Verweilzeit
5 % = Gew.-%

**Ansprüche**

1. Verfahren zur Herstellung von hochprozentigen Peroxiden zweiwertiger Metalle durch Behandlung von festen Verbindungen dieser Metalle mit wäßrigem Wasserstoffperoxid und nachfolgender Trocknung der gewonnenen Mischung, dadurch gekennzeichnet, daß man festes, wasserfreies oder hydratisiertes Oxid und/oder Hydroxid des zweiwertigen Metalles in einer Intensiv-Mischapparatur, gegebenenfalls unter Kühlen, kontinuierlich mit Wasserstoffperoxid-Lösung zu einer Suspension umsetzt und diese unmittelbar einem Kurzzeittrockner zur Trocknung zuführt, wobei man für den Stoffstrom im Bereich zwischen Eintritt in die Intensiv-Mischapparatur bis Eintritt in den Kurzzeittrockner eine mittlere Verweilzeit von 0,1 bis 15 Minuten einstellt.

2. Verfahren nach Anspruch 1, dadurch gekennzeichnet, daß man als zweiwertiges Metall ein Metall der zweiten Gruppe des periodischen Systems einsetzt.

3. Verfahren nach Anspruch 2, dadurch gekennzeichnet, daß man als zweiwertiges Metall ein Erdalkalimetall einsetzt.

4. Verfahren nach Anspruch 2, dadurch gekennzeichnet, daß man als zweiwertiges Metall Zink einsetzt.

5. Verfahren nach einem der Ansprüche 1 bis 4, dadurch gekennzeichnet, daß man für den Stoffstrom in Bereich zwischen Eintritt in die Intensiv-Mischapparatur bis Eintritt in den Kurzzeittrockner eine mittlere Verweilzeit von 0,5 bis 5 Minuten einstellt.

6. Verfahren nach einem der Ansprüche 1 bis 5, dadurch gekennzeichnet, daß man als Wasserstoffperoxid eine wäßrige Lösung mit einem Gehalt von 30 bis 70 Gew.% $H_2O_2$ einsetzt.

7. Verfahren nach einem der Ansprüche 1 bis 6, dadurch gekennzeichnet, daß man Oxid und/oder Hydroxid mit $H_2O_2$ in etwa stöchiometrischem Verhältnis einsetzt.

8. Verfahren nach einem der Ansprüche 1 bis 7, dadurch gekennzeichnet, daß man als Kurzzeittrockner einen Sprühtrockner, vorzugsweise mit Zentrifugalzerstäuber verwendet.

9. Verfahren nach einem der Ansprüche 1 bis 7, dadurch gekennzeichnet, daß man als Kurzzeittrockner einen Flashdryer verwendet.

**Claims**

1. Process for the production of high percentage peroxides of divalent metals by treating solid compounds of these metals with aqueous hydrogen peroxide and subsequently drying the mixture thus obtained, characterised in that solid, anhydrous or hydrated oxide and/or hydroxide of the divalent metal is continuously reacted with hydrogen peroxide solution in an intensive action mixing device, if necessary with cooling, to give a suspension and that this is immediately passed into a short time dryer for drying, the average time of residence of the product stream in the area between the inlet into the intensive action mixing device and the inlet into the short time dryer being adjusted to 0.1 to 15 minutes.

2. Process according to claim 1, characterised in that a metal of the second group of the periodic system is used as the divalent metal.

3. Process according to claim 2, characterised in that an alkaline earth metal is used as the divalent metal.

4. Process according to claim 2, characterised in that zinc is used as the divalent metal.

5. Process according to one of claims 1 to 4, characterised in that an average residence time of the product stream in the area between the inlet into the intensive action mixing device and the inlet into the short time dryer of 0.5 to 5 minutes is adjusted.

6. Process according to one of claims 1 to 5, characterised in that an aqueous solution with a concentration of 30 to 70 wt.% $H_2O_2$ is used as hydrogen peroxide.

7. Process according to one of claims 1 to 6, characterised in that the oxide and/or hydroxide is used with $H_2O_2$ in an approximately stoichiometric ratio.

8. Process according to one of claims 1 to 7, characterised in that a spray dryer, preferably a centrifuge atomiser, is used as the short time dryer.

9. Process according to one of claims 1 to 7, characterised in that a flash dryer is used as the short time dryer.


**Revendications**

1. Procédé pour la fabrication de peroxydes de métaux divalents à teneur élevée par traitement de composés de ces métaux à l'état solide avec du peroxyde d'hydrogène aqueux et séchage subséquent du mélange obtenu caractérisé en ce qu'on fait réagir en continu dans un mélangeur à action intensive de l'oxyde et/ou de l'hydroxyde solide, anhydre ou hydraté, du métal divalent avec une solution de peroxyde d'hydrogène, éventuellement en refroidissant, de manière à produire une suspension qui est amenée directement pour le séchage dans un sécheur à court temps de séjour et en ce qu'on règle le courant de matière dans la zone comprise entre l'entrée dans le mélangeur à action intensive et l'entrée dans le sécheur à court temps de séjour de façon à obtenir une durée de séjour moyenne de 0,1 à 15 minutes.

2. Procédé suivant la revendication 1 caractérisé en ce qu'on emploie comme métal divalent un métal du deuxième groupe du système périodique.

3. Procédé suivant la revendication 2 caractérisé en ce qu'on emploie un métal alcalino-terreux comme métal divalent.

4. Procédé suivant la revendication 2 caractérisé en ce qu'on emploie le zinc comme métal divalent.

5. Procédé suivant l'une des revendications 1 à 4 caractérisé en ce qu'on règle le courant de matière dans la zone comprise entre l'entrée dans le mélangeur à action intensive et l'entrée dans le sécheur à court temps de séjour de manière à obtenir une durée de séjour moyenne de 0,5 à 5 minutes.

6. Procédé suivant l'une des revendications 1 à 5 caractérisé en ce qu'on emploie comme peroxyde d'hydrogène une solution aqueuse ayant une teneur en $H_2O_2$ de 30 à 70 % en poids.

7. Procédé suivant l'une des revendications 1 à 6 caractérisé en ce qu'on emploie l'oxyde et/ou l'hydroxyde et le $H_2O_2$ en une proportion à peu près stœchiométrique.

8. Procédé suivant l'une des revendications 1 à 7 caractérisé en ce qu'on emploie comme sécheur à court temps de séjour un sécheur à pulvérisation, de préférence à pulvérisateur centrifuge.

9. Procédé suivant l'une des revendications 1 à 7 caractérisé en ce qu'on emploie un « sécheur atomiseur » comme sécheur à court temps de séjour.